## Europäisches Patentamt

## European Patent Office

## Office européen des brevets

(11) Veröffentlichungsnummer: **0 047 443**
**B1**

(12) **EUROPÄISCHE PATENTSCHRIFT**

<table>
<tr><td>(45) Veröffentlichungstag der Patentschrift:<br>14.11.84</td><td>(51) Int. Cl.³: **F 28 F 3/12, F 24 J 3/02**</td></tr>
</table>

(21) Anmeldenummer: **81106657.0**

(22) Anmeldetag: **27.08.81**

(54) **Verfahren zur Herstellung eines Wärmeaustauscherelementes.**

<table>
<tr><td>

(30) Priorität: **04.09.80 DE 3033223**<br>**04.09.80 DE 8023518 U**<br>**04.09.80 DE 8023519 U**

(43) Veröffentlichungstag der Anmeldung:<br>**17.03.82 Patentblatt 82/11**

(45) Bekanntmachung des Hinweises auf die Patenterteilung:<br>**14.11.84 Patentblatt 84/46**

(84) Benannte Vertragsstaaten:<br>**AT BE CH DE FR GB IT LI LU NL SE**

(56) Entgegenhaltungen:<br>**DE - A - 2 647 215**<br>**DE - A - 2 714 901**<br>**DE - A - 2 736 983**<br>**DE - A - 2 804 231**<br>**FR - A - 2 424 489**<br>**US - A - 3 236 294**

</td><td>

(73) Patentinhaber: **HOECHST AKTIENGESELLSCHAFT,**<br>**Postfach 80 03 20, D-6230 Frankfurt am Main 80 (DE)**

(72) Erfinder: **Disselbeck, Dieter, Am Rehsteig 3, D-6232 Bad**<br>**Soden am Taunus (DE)**<br>Erfinder: **Stahl, Dieter, Am Mühlbach 24, D-6239 Kriftel**<br>**(DE)**

</td></tr>
</table>

ACTORUM AG

**Beschreibung**

Die Erfindung betrifft ein Verfahren zur Herstellung eines Wärmeaustauscherelementes, das aus einem Doppelgewebe mit steifen Abstandhalterfilamenten besteht, das gegen fluide Wärmeträgermedien abgedichtet ist, und das Zu- und Ableitungen für die fluiden Wärmeträgermedien aufweist.

Im Hinblick auf eine rationale Energienutzung und auf neue Verfahren zur Nutzung regenerativer Energiequellen stellt sich in zunehmendem Masse die Aufgabe, Wärmeaustauscher zur Verfügung zu stellen, die möglichst verlustfrei Wärme übertragen und die in grossen Flächen aus korrosionsfesten Werkstoffen hergestellt werden können. Bei herkömmlichen Plattenwärmeaustauschern wird das Wärmeträgermedium durch Rohre oder Kanäle geführt, wobei in verschiedenen Varianten die Rohre oder Kanäle mit Rippen verbunden sind oder in der Fläche integriert sind.

Ausschlaggebend für die wärmetechnische Güte eines Plattenwärmeaustauschers sind dabei der Wärmeübergang zwischen Rippe und Rohr und der Wärmedurchgang, der im wesentlichen von dem Rohrabstand, der Rohr- und Rippendicke sowie von der Wärmeleitfähigkeit des Materials abhängt. Besonders günstige Verhältnisse werden erreicht, wenn die mit dem Wärmeträgermedium benetzte Fläche mit der Grösse der äusseren Wärmeübertragungsfläche annähernd übereinstimmt, d.h. wenn ein vollflächig durchströmter Hohlkörper ohne Rippen, Rohre oder Kanäle hergestellt werden kann.

In der DE-OS 2 714 901 ist ein derartiges System in Form eines flexiblen Wärmeaustauschers beschrieben, der aus einer beidseitig beschichteten Doppelgewebebahn besteht, die mit Zu- und Ableitungen für ein Wärmeträgermedium versehen ist. Bei diesem Aufbau des Wärmeaustauschers ist die Wärmeleitfähigkeit des Materials von untergeordneter Bedeutung, und es können auch vorteilhaft korrosionsfeste Kunststoffe eingesetzt werden. Trotz der im Vergleich zu Metallen wesentlich geringeren Wärmeleitfähigkeit von Kunststoffen ergibt sich ein günstiger Wärmedurchgang, da die Wärme nur über eine sehr kurze Strecke entsprechend der Wanddicke des Wärmeaustauscherelementes transportiert werden muss.

Offen blieb aber der Wunsch, die vorteilhaften Wärmeaustauscheigenschaften, insbesondere die vollflächige Durchströmung der Wärmeaustauscherelemente nach DE-OS 2 714 901 auch eigenformstabilen Wärmeaustauschern zu verleihen, für die dies bisher noch nicht möglich gewesen war, sowie nach ebenen und gewellten Dachabdeckungen mit integriertem Wärmeaustauscherelement. Offen blieb insbesondere der Wunsch nach einem einfachen sicheren Verfahren zur Herstellung solcher eigenformstabilen Elemente.

Aufgabe der Erfindung ist es daher, das vorteilhafte Prinzip des vollflächig durchströmten Wärmeaustauschers für möglichst viele Einsatzgebiete zugänglich zu machen, sowie deren Herstellung wirtschaftlich durchzuführen.

Erfindungsgemäss wird diese Aufgabe bei einem Verfahren der eingangs genannten Art dadurch gelöst, dass das Doppelgewebe in die gewünschte Form gebracht, dann auf der Ober- und Unterseite mit je einer Schicht eines aushärtbaren Dichtungsmaterials versehen, und dann in dieser Form zu einem eigenformstabilen Element ausgehärtet wird, und dass Ober- und Unterschicht an den Kanten des Doppelgewebes gegen das fluide Wärmeaustauschermedium dicht miteinander verbunden werden, und dass Zu- und Ableitungen angebracht werden.

Nach einer anderen erfindungsgemässen Variante wird das Doppelgewebe auf der Ober- und Unterseite mit je einer Schicht eines aushärtbaren Dichtungsmaterials versehen, dann in die gewünschte Form gebracht, dann in dieser Form zu einem eigenformstabilen Element ausgehärtet, und dann werden Ober- und Unterschicht an den Kanten des Doppelgewebes gegen das fluide Wärmeaustauschermedium dicht miteinander verbunden sowie Zu- und Ableitungen angebracht. Als Dichtungsmaterial werden mindestens auf einer Seite aushärtbare Materialien eingesetzt, die in an sich bekannter Weise ausgehärtet werden. Vorzugsweise wird auf mindestens einer Seite des Doppelgewebes ein aushärtbares Material aufgebracht, dann wird das so behandelte Doppelgewebe in die gewünschte Form gebracht und dann wird in dieser Form ausgehärtet. Nach einer anderen Variante des erfindungsgemässen Verfahrens wird die Eigenformstabilität dadurch bewirkt, dass das Doppelgewebe auf mindestens einer Seite mit einem vorgeformten Körper verbunden wird.

Die zur Herstellung des Wärmeaustauscherelementes verwendeten Doppelgewebe sind bekannt. Sie werden z.B. nach dem in der DE-OS 1 535 736 beschriebenen Verfahren hergestellt, oder nach Melliand Textilberichte 7/1970, S. 766. Die Abstandhalterfilamente sind vorteilhaft Monofilamente und geben so dem Doppelgewebe die erforderliche Festigkeit gegen Zusammendrücken. Das Doppelgewebe einschliesslich der Abstandhalterfilamente besteht je nach Anforderungen an seine Eigenschaften aus Polyestern, Polyamiden, Polytetrafluorethylen, Glas oder anderen Fadenmaterialien.

Die Zu- und Ableitungen für das fluide Wärmeträgermedium, welches das Wärmeaustauscherelement durchfliessen soll, werden wie bekannnt angebracht, z.B. nach der bereits erwähnten DE-OS 2 714 901 oder wie in der DE-OS 2 923 913 beschrieben.

Das Wärmeaustauscherelement muss nach allen Seiten für das benutzte fluide Wärmeübertragermedium dicht sein. Als Abdichtungsmaterialien kommen sowohl Platten aus Metallen wie z.B. Kupfer oder Aluminium als auch flache Körper aus den üblichen thermoplastischen Kunststoffen wie z.B. Polyethylen, Polypropylen, Polyvinylchlorid oder Polystyrol in Frage; dabei können dann die Seitenteile des Wärmeaustauscherelementes durch Verschweissen oder Verkleben geschlossen werden.

Als sehr sinnvoll hat es sich erwiesen, dass die Abdichtung auf mindestens einer Seite aus zunächst verformbarem, dann aber durch Aushärten versteiftem Material besteht. Diese aushärtbaren Materialien sind vorzugsweise duromere Kunstharze, wie ungesättigte Polyesterharze, Epoxidharze, Methacrylatharze, Phenolformaldehydharze, Melaminharze oder Furanharze. Es können aber auch hydraulisch abbindende Materialien, wie z.B. Zement oder Gips zum Einsatz kommen. Alle diese Materialien können mit Glasfasern oder mit Gewebe verstärkt sein.

Nach dem Aufbringen des noch verformbaren Abdichtungsmaterials erfolgt das Aushärten nach den bekannten Methoden.

Zum Erzielen besonderer optischer Effekte wird mindestens eine der beiden Oberflächen des Wärmeaustauscherelementes strukturiert. Dadurch bekommt das Wärmeaustauscherelement die äussere Struktur anderer, herkömmlicher Werkstoffe, z.B. von Dachziegeln oder von Schieferplatten.

Durch formschlüssiges Verbinden des zunächst noch verformbaren Doppelgewebes mit einem vorgeformten Flächengebilde, wie z.B. einer gewellten Asbestzementplatte, oder an eine gewellte Kunststoffplatte, die als Dachdeckung dienen soll, erhält man ein Wärmeaustauscherelement, welches die günstigen mechanischen Eigenschaften dieser vorgegebenen gewellten Platte mit den günstigen Wärmeaustauschereigenschaften des vollflächig durchströmten Doppelgewebes vereint. Ebenso reicht es aber für viele Zwecke auch aus, das mit dem noch zunächst verformbaren Material bestrichene Doppelgewebe selbst in die gewünschte Form zu bringen und danach das Aushärten vorzunehmen.

Im folgenden soll die Herstellung der formstabilen, vollflächig durchströmten Wärmeaustauscherelemente noch näher beschrieben werden. Ein Doppelgewebe der gewünschten Abmessungen, z.B. 5 x 1 m und von einem Abstand von 2 mm zwischen Ober- und Untergewebe, wird zwischen zwei mit härtbarem Kunstharz getränkten und auf ihren Rückseiten mit einer Trennfolie versehenen Fasermatten eingelegt und wird durch leichte Pressung mit einem Rakel beidseitig beschichtet. Zur Vermeidung von Schweiss- und Fügearbeiten zur Abdichtung der offenen Ränder des Doppelgewebes ist es vorteilhaft, dass das Kunstharzlaminat eine grössere Abmessung hat als die Doppelgewebebahn, damit beide Kunstharzlaminate ausserhalb des Randes des Doppelgewebes miteinander verbunden werden.

Eine druckfeste Abdichtung des eingelegten Doppelgewebes kann auch dadurch erreicht werden, dass das mit dem Kunstharzlaminat versehene Doppelgewebe nach der Aushärtung des Kunstharzes in den Randbereichen mit einer umlaufenden Einfräsung bis zur unteren Schicht versehen wird, und dass die so erhaltene Nut mit einem Kunstharz vorzugsweise deckschichtbündig ausgegossen wird. Dabei ist die Viskosität des Kunstharzes so eingestellt, dass ein Verlaufen des Kunstharzes in das Doppelgewebe hinein vermieden wird. Nach dem Abziehen der Trennfolie erhält man auf diese Weise ein flächiges, druckfestes und dimensionsstabiles Hohlkörperelement mit brillanter Oberfläche, welches, mit Zu- und Ableitungen versehen, in weiten Bereichen der Technik als Plattenwärmeaustauscher oder Wärmeabsorber eingesetzt werden kann.

Üblicherweise sind die Zu- und Ableitungen für das fluide Medium diagonal versetzt angeordnet. Sie können sich aber auch auf derselben Seite des Wärmeaustauscherelementes befinden. Um dabei eine vollflächige Durchströmung des Wärmeaustauscherelementes sicherzustellen, wird in der Mitte des Wärmeaustauscherelementes zwischen Zu- und Ableitung eine Zone mit einem höheren Strömungswiderstand gebildet, wobei diese Zone das Wärmeaustauscherelement nur zum Teil in zwei getrennte Strömungskammern unterteilt. Man erreicht dies beispielsweise dadurch, dass senkrecht zur Verbindungslinie der Anschlüsse eine Nut gefräst wird, die sich nur über einen Teil der Länge bzw. der Breite des Wärmeaustauscherelementes erstreckt, und die mit einem Kunstharz ausgegossen wird. Diese Anordnung der Anschlüsse auf der einen Seite des Wärmeaustauscherelementes erspart in manchen Anwendungsfällen Montagekosten und erleichtert die Integration in bestehende Systeme. Dies ist beispielsweise bei dem Einsatz der Wärmeaustauscherelemente als Wärmeabsorber in Energiedach/Wärmepumpensystemen zur Nutzung der Umgebungswärme der Fall. Ohne die risikoreiche Durchführung der Rohrleitungen durch die Dachhaut und ohne Sichtbarwerden von Rohrleitungen auf dem Dach können bei einseitiger Anordnung die Zu- und Ableitungsrohre beispielsweise unter der Firstabdeckung verlegt werden.

Die erfindungsgemässen Wärmeaustauscherelemente finden eine bevorzugte Anwendung in Form ebener oder gewellter Dachplatten mit integriertem Wärmeaustauscherelement.

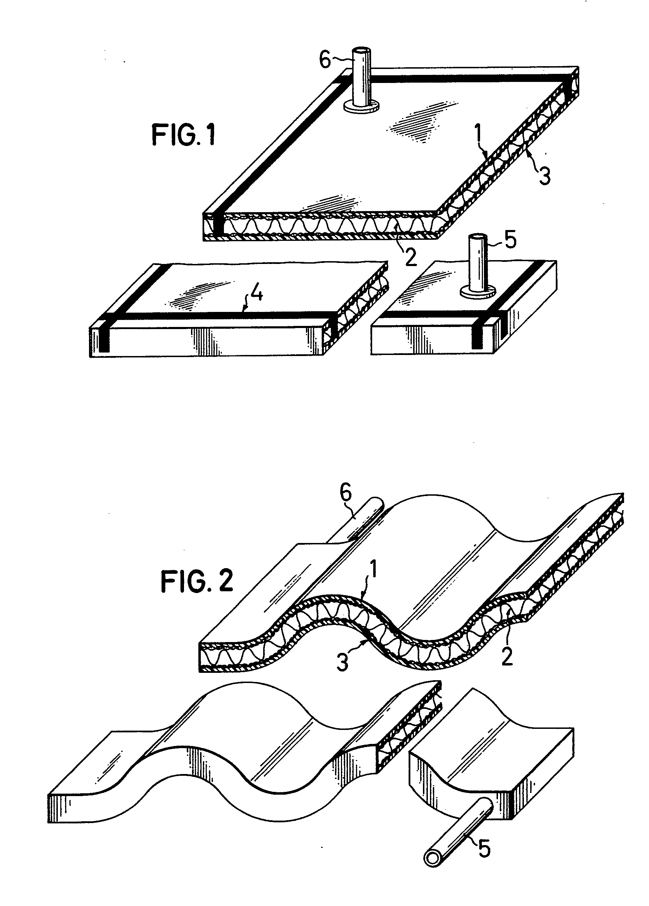

Die beigefügten Figuren 1 und 2 zeigen Ausführungsformen der Erfindung. Darin bedeuten 1 Dichtungsschicht, 2 Doppelgewebe mit Abstandhalterfäden, 3 Dichtungsschicht, 4 ausgegossene Nut, 5 und 6 Zu- und Ableitungen.

Fig. 1 zeigt eine ebene Dachplatte, Fig. 2 eine gewellte Dachplatte.

**Patentansprüche**

1. Verfahren zur Herstellung eines Wärmeaustauscherelementes, das aus einem Doppelgewebe mit steifen Abstandhalterfilamenten besteht, das gegen fluide Wärmeträgermedien abgedichtet ist, und das Zu- und Ableitungen für die fluiden Wärmeträgermedien aufweist, dadurch gekennzeichnet, dass das Doppelgewebe in die gewünschte Form gebracht, dann auf der Ober- und Unterseite mit je einer Schicht eines aushärtbaren Dichtungsmaterials versehen und dann in dieser Form zu einem eigenformstabilen Element ausgehärtet wird, und dass Ober- und Unterschicht an den Kanten des Doppelgewebes gegen das fluide Wärmeaustauschermedium dicht miteinander verbunden werden, und dass Zu- und Ableitungen angebracht werden.

2. Verfahren nach Anspruch 1, dadurch gekennzeichnet, dass die Eigenformstabilität dadurch bewirkt wird, dass das Doppelgewebe auf mindestens einer Seite mit einem vorgeformten Körper verbunden wird.

3. Verfahren nach einem der Ansprüche 1 und 2, dadurch gekennzeichnet, dass mindestens eine Oberfläche vor dem Aushärten strukturiert wird.

4. Verfahren zur Herstellung eines Wärmeaustauscherelementes, das aus einem Doppelgewebe mit steifen Abstandhalterfilamenten besteht, das gegen fluide Wärmeträgermedien abgedichtet ist, und das Zu- und Ableitungen für die fluiden Wärmeträgermedien aufweist, dadurch gekennzeichnet, dass das Doppelgewebe auf der Ober- und Unterseite mit je einer Schicht eines aushärtbaren Dichtungsmaterials versehen wird, dass es dann in die gewünschte Form gebracht wird, dass es dann in dieser Form zu einem eigenformstabilen Element ausgehärtet wird, dass Ober- und Unterschicht an den Kanten des Doppelgewebes gegen das fluide Wärmeaustauschermedium dicht miteinander verbunden werden, und dass Zu- und Ableitungen angebracht werden.

## Claims

1. Process for the production of a heat-exchanger element which consists of a two-ply woven fabric with rigid spacer filaments, and which is sealed against fluid heat transfer media, and which has inlet and outlet lines for the fluid heat transfer media, characterized in that the two-ply woven fabric is brought into the desired shape, that it is then provided, on the upper side and on the underside, with a layer of curable sealing material, and that curing to bring about a rigid element is then carried out, and that upper and lower layer are bonded to one another, at the edges of the two-ply woven fabric, in a manner which is leakproof, and that inlet and outlet lines are attached.

2. Process according to claim 1, characterized in that the rigidity is effected by attaching the two-ply woven fabric at least at one side to a pre-formed structure.

3. Process according to one of claims 1 or 2, characterized in that at least one surface gets a textured finish prior to the curing.

4. Process for the production of a heat-exchanger element which consists of a two-ply woven fabric with rigid spacer filaments, and which is sealed against fluid heat transfer media, and which has inlet and outlet lines for the fluid heat transfer media, characterized in that the two-ply woven fabric is provided, on the upper side and on the underside, with a layer of curable sealing material, that it is then brought into the desired shape, that it is cured in this shape to bring about a rigid element, that upper and lower layer are bonded to one another, at the edges of the two-ply woven fabric, in a manner which is leakproof, and that inlet and outlet lines are attached.

## Revendications

1. Procédé de fabrication d'un élément échangeur de chaleur, qui se compose d'un double tissu avec filaments rigides de maintien d'espacement, qui est isolé de façon étanche par rapport à des milieux fluides de transport de chaleur et qui comporte des conduits d'entrée et de sortie des milieux fluides de transport de chaleur, caractérisé en ce que le double tissu, amené à la forme désirée, est ensuite pourvu sur le côté supérieur et sur le côté inférieur respectivement d'une couche d'un matériau d'étanchéité durcissable et est ensuite durci à ce profil pour constituer un élément de forme stable et en ce que la couche supérieure et la couche inférieure sont liées ensemble de façon étanche au milieu fluide d'échange de chaleur sur les bords du double tissu et en ce que des conduits d'entrée et de sortie sont mis en place.

2. Procédé selon la revendication 1, caractérisé en ce que la stabilité de forme est établie par le fait que le double tissu est relié au moins d'un côté à un corps préformé.

3. Procédé selon une des revendications 1 et 2, caractérisé en ce qu'au moins une surface est structurée avant le durcissement.

4. Procédé de fabrication d'un élément échangeur de chaleur, qui se compose d'un double tissu avec filaments rigides de maintien d'espacement, qui est isolé de façon étanche par rapport à des milieux fluides de transport de chaleur et qui comporte des conduits d'entrée et de sortie des milieux fluides de transport de chaleur, caractérisé en ce que le double tissu est pourvu sur le côté supérieur et sur le côté inférieur respectivement d'une couche d'un matériau d'étanchéité durcissable, en ce qu'ensuite il est amené au profil désiré, en ce qu'ensuite il est durci à ce profil pour constituer un élément de forme stable, en ce que la couche supérieure et la couche inférieure sont reliées l'une avec l'autre de façon étanche au milieu fluide d'échange de chaleur sur les bords du double tissu et en ce que des conduits d'entrée et de sortie sont mis en place.

FIG.1

FIG. 2